# DEMANDE DE BREVET EUROPEEN

(11) **EP 2 682 847 A1**
(43) Date de publication de la demande: **08.01.2014**
(21) Numéro de dépôt: 13175318.8
(22) Date de dépôt: 05.07.2013
(51) Int. Cl.: G06F 3/042

(54) **Dispositif et procédé de detection infrarouge à commande tactile multitouchers prédictible**

(30) Priorité: 06.07.2012 FR 1256557
(71) Demandeur: ECE, 75020 Paris (FR)
(72) Inventeur: Neveu, Sébastien, 75020 PARIS (FR); De Bossoreille, Romain, 75020 PARIS (FR); Andreoletti, Rémi, 75020 PARIS (FR)
(74) Mandataire: Lucas, Laurent Jacques

(57) **Abrégé**

Le dispositif comporte au moins un cadre, un premier groupes d'émetteurs de rayons infrarouges associé à un premier groupe de récepteurs selon une première direction x et un deuxième groupe d'émetteurs de rayons infrarouges associé à un deuxième groupe de récepteurs selon une deuxième direction y, lesdits groupes encadrant un espace d'intéraction tactile, le balayage de cet espace étant réalisé par les activations successives des émetteurs du premier groupe puis du deuxième groupe, un toucher sur l'écran provoquant une interruption de rayons émis, caractérisé en ce que, pour le premier groupe d'émetteurs et pour le deuxième groupe d'émetteurs :
- chaque émetteur est associé à un sous-groupe de récepteurs contigus ou non destinés à capter les rayons émis par ledit émetteur, les récepteurs dudit sous-groupe étant disposés en regard dudit émetteur, l'ensemble de tous les couples (k, k+j) possibles étant mémorisés, où k représente le rang d'un émetteur dans le groupe et k+j le rang d'un de ses récepteurs associés ;
- les cycles de balayage sont initiés selon des périodes de temps fixes, un cycle de balayage comportant un balayage complet de durée constante selon le premier groupe d'émetteurs et un balayage complet de durée constante selon le deuxième groupe d'émetteurs, un couple (k, k+j) étant affecté à chaque rayon émis et reçu, k étant le rang de l'émetteur et k+j le rang du récepteur ;

l'ensemble des rayons émis non reçus, identifiés par leurs couples (k, k+j), définissant un ou plusieurs zones d'ombres, la détection d'un ou plusieurs touchers (7, 8) étant effectuée par l'analyse de ces zones par lesdits moyens de traitement.

## Description

La présente invention concerne un dispositif et un procédé de commande tactile multitouchers prédictible. Elle s'applique notamment pour des écrans d'affichage équipant des pylônes ou des planches de bord des cockpits d'aéronefs.

Les dispositifs avioniques embarqués utilisent de plus en plus de solutions à écrans tactiles. Aux interfaces de commandes traditionnelles de type touches électromécaniques ou à souris, on préfère des solutions de type tactiles en raison notamment des facilités ergonomiques apportées par ces solutions ainsi que pour leur reconfigurabilité et gain de place. Plusieurs dispositifs d'affichage équipant les cockpits d'aéronefs peuvent être candidats pour des commandes tactiles, c'est-à-dire combiner l'affichage des informations à l'écran et la commande sur écran par simple toucher (ou singletouch) ou plusieurs touchers (ou multitouch).

C'est notamment le cas de la planche utilisée pour la préparation et le suivi des vols, appelée planche EFB selon l'expression anglo-saxonne « Electronique Flight Bag ». Cette planche, posée à plat sur le pylône central du cockpit remplace les documents papiers antérieurs comportant notamment les cartes, cartes d'approche, check-lists, manuels de vol et d'opérations, niveau de carburant, etc ... Ces différentes informations sont affichées en fonction de la commande appliquée par le pilote au moyen d'un menu IHM disponible sur l'écran et via des interfaces traditionnelles telles que décrites précédemment. La gestion de l'affichage des données est effectuée par des moyens de traitement intégrés dans l'écran ou plus généralement dans un module associé à l'écran, ces moyens communiquant avec les interfaces de commande.

Tous les écrans du cockpit peuvent également être candidats à une solution du type commande tactile.

Dans une solution tactile, la commande de l'affichage se fait par touchers tactiles sur l'écran. La commande par simple toucher permet par exemple de pointer un objet d'un menu affiché ou un lieu sur une carte. La solution multitouchers permet d'enrichir la commande tactile. En particulier le mouvement des doigts, deux doigts par exemple, peut contenir une information complémentaire, plus riche. Une commande multitouchers permet ainsi d'adopter des gestuelles à plusieurs doigts, chaque gestuelle correspondant à une information bien définie.

Plusieurs technologies d'écrans tactiles sont connues. On peut notamment citer les types :
- capacitifs ;
- résistifs ;
- à infrarouge

Chacune de ces technologies permet, au travers d'algorithmes particuliers, la gestion et la détection par simple toucher ou par multitouchers.

Une technologie largement répandue est la commande capacitive. On la rencontre par exemple pour la commande de l'affichage des écrans des téléphones intelligents ou « smartphones » ou des tablettes logicielles multifonctions.

La commande capacitive est peu adaptée pour un environnement avionique qui est soumis à diverses perturbations telles que les interférences électromagnétiques notamment. Or la détection des touchers se fait par la détection d'interférences électromagnétiques générées par ces mêmes touchers. Ainsi, une commande capacitive est inapte à assurer une sûreté de fonctionnement sans moyens de parade efficaces complexes et coûteux à mettre en oeuvre.

Une solution insensible aux perturbations précitées est la commande tactile infrarouge connue pour être résistante. Pour une application multitoucher elle ne permet cependant pas, avec les solutions actuelles, une commande tactile prédictible. En d'autres termes, la durée de traitement pour localiser la position d'au moins deux touchers sur l'écran est indéterminée en raison notamment du nombre de touchers et de la taille de ces mêmes touchers. Cette indétermination est incompatible d'une application aéronautique qui nécessite précision et prédictibilité.

Un but de l'invention est notamment de permettre l'utilisation d'un écran tactile de type infrarouge permettant d'appliquer des commandes multitoucher prédictibles et précises.

A cet effet, l'invention a pour objet un dispositif de commande tactile du type à barrières infrarouges comportant au moins un cadre, un premier groupe d'émetteurs de rayons infrarouges faisant face à un premier groupe de récepteurs selon une première direction x et un deuxième groupe d'émetteurs de rayons infrarouges faisant face à un deuxième groupe de récepteurs selon une deuxième direction y, lesdits groupes encadrant un espace d'interaction tactile, le balayage de cet espace étant réalisé par les activations successives des émetteurs du premier groupe puis du deuxième groupe, l'intrusion d'un objet opaque, dit toucher, à l'intérieur de l'espace d'interaction tactile provoquant une interruption de rayons émis, **caractérisé en ce que**, pour le premier groupe d'émetteurs et pour le deuxième groupe d'émetteurs :
- chaque émetteur est associé à un sous-groupe de récepteurs destinés à capter les rayons émis par ledit émetteur, les récepteurs dudit sous-groupe étant disposés en regard dudit émetteur, l'ensemble de tous les couples (k, k+j) balayés étant mémorisé, où k représente le rang d'un émetteur dans le groupe et k+j le rang d'un de ses récepteurs associés ;
- les cycles de balayage sont initiés selon des périodes de temps fixes, un cycle de balayage comportant un balayage complet de durée constante selon le premier groupe d'émetteurs et un balayage complet de durée constante selon le deuxième groupe d'émetteurs, un couple (k, k+j) étant affecté à chaque rayon émis et reçu, k étant le rang de l'émetteur et k+j le rang du récepteur ;

l'ensemble des rayons émis non reçus, identifiés par leurs couples (k, k+j), définissant un ou plusieurs zones d'ombres, la détection d'un ou plusieurs touchers étant effectuée par l'analyse de ces zones par lesdits moyens de traitement.

Dans un mode de réalisation particulier, -p < j < p, où p est un entier positif, j prenant certaines ou toutes les valeurs entre -p et p, 2p+1 étant inférieur au nombre de récepteurs du groupe.

Une première série de zones d'ombres est par exemple obtenue selon la direction x, et une deuxième série de zones d'ombres est par exemple obtenue selon la direction y, un espace non balayé contenant au moins un toucher, ladite analyse étant effectuée sur le ou les espaces obtenus par l'intersection des premières et deuxièmes séries de zones.

Les moyens de traitement distinguent par exemple les touchers réels des touchers fantômes sur un critère de tailles, de formes, d'étendue de ces zones d'ombres et/ou par comparaison avec l'état précédent des touchers. Les rayons émis peuvent être modulés en fréquence, le rayon reçu par un récepteur Rk+j étant associé à un émetteur Rk en fonction du rang dudit récepteur Rk+j et de la vérification de ladite modulation.

Les moyens de traitement sont par exemple incorporés dans ledispositif, ces moyens de traitement transmettant les positions des touchers àdes interfaces d'affichages.

Le dispositif est apte à équiper un cockpit d'aéronef.

L'invention a également pour objet un procédé de commande tactile du type à barrières infrarouges, ledit procédé utilisant un premier groupe d'émetteurs de rayons infrarouges faisant face à un premier groupe de récepteurs selon une première direction x et un deuxième groupe d'émetteurs de rayons infrarouges faisant face à un deuxième groupe de récepteurs selon une deuxième direction y, lesdits groupes encadrant un espace d'intéraction tactile, le balayage de cet espace étant réalisé par les activations successives des émetteurs du premier groupe puis du deuxième groupe, l'intrusion d'un objet opaque, dit toucher, à l'intérieur de l'espace d'intéraction tactile provoquant une interruption de rayons émis, **caractérisé en ce que**, pour le premier et pour le deuxième groupe d'émetteurs :
- on associe à chaque émetteur un sous-groupe de récepteurs destinés à capter les rayons émis par ledit émetteur, les récepteurs dudit sous-groupe étant disposés en regard dudit émetteur, l'ensemble de tous les couples (k, k+j) balayés étant mémorisé, où k représente le rang d'un émetteur dans le groupe et k+j le rang d'un de ses récepteurs associés ;
- on initie les cycles de balayage selon des périodes de temps fixes, un cycle de balayage comportant un balayage complet de durée constante selon le premier groupe d'émetteurs et un balayage complet de durée constante selon le deuxième groupe d'émetteurs, un couple (k, k+j) étant affecté à chaque rayon émis et reçu, k étant le rang de l'émetteur et k+j le rang du récepteur ;

l'ensemble des rayons émis non reçus, identifiés par leurs couples (k, k+j), définissant un ou plusieurs zones d'ombres, la détection d'un ou plusieurs touchers étant effectuée par une analyse de ces zones.

D'autres caractéristiques et avantages de l'invention apparaîtront à l'aide de la description qui suit, faite en regard de dessins annexés qui représentent :
- les figures 1a et 1b, une illustration du principe de fonctionnement d'un cadre tactile par détection à barrières infrarouges ;
- la figure 2, une illustration de l'ambiguïté de détection d'une commande multitoucher ;
- les figures 3a et 3b, une illustration d'un mode de balayage des rayons infrarouge dans un dispositif selon l'invention ;
- les figures 4a et 4b, une illustration de l'application d'une commande multitouchers dans le cas du balayage précédent ;
- la figure 5, un exemple de détection non ambigüe.

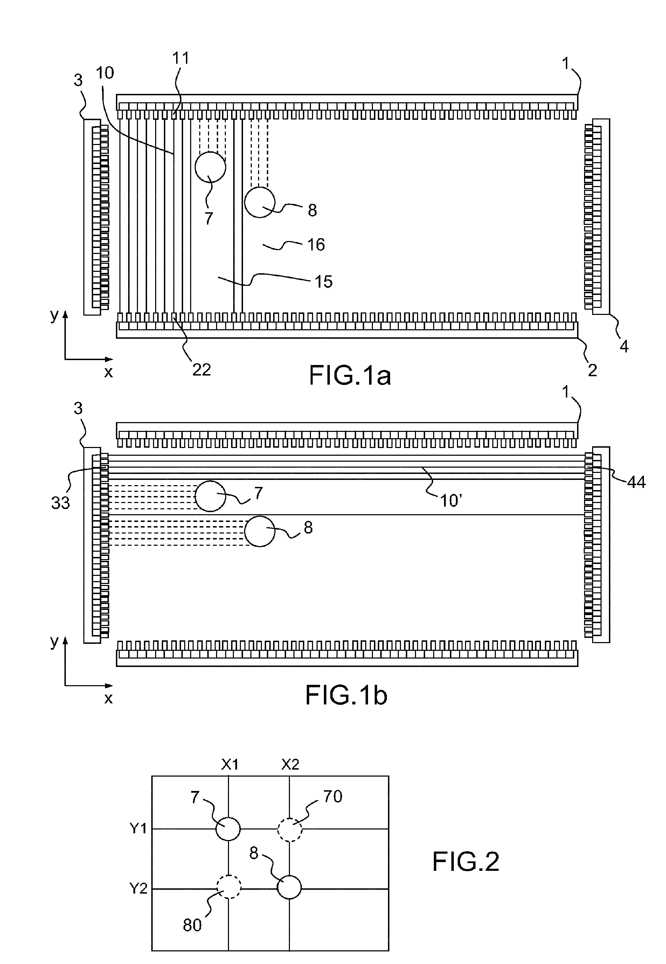

Les figures 1a et 1b illustrent le principe de fonctionnement d'un cadre tactile par détection à barrières infrarouges tel que définit par l'état de l'art ainsi que le problème de l'incertitude de mesure dans un cas d'application de deux touchers 7 et 8, sans algorithme de traitement particulier, couplé au problème de manque de prédictibilité.

Seuls les émetteurs, les récepteurs et les rayons infrarouges sont représentés.

Le cadre tactile n'est ni un écran ni une « dalle tactile à proprement parler mais bien un cadre où sont installés des groupes d'émetteurs 1, 3 et des groupes de récepteurs 2, 4. Eventuellement, ce cadre peut-être installé sur une dalle pour fournir un support aux touchers et/ou proposer de l'affichage. Les groupes d'émetteurs créent un maillage de rayons infrarouges invisible aux utilisateurs.

Un premier groupe d'émetteurs 1 est placé sur un premier côté du cadre, par exemple dans le sens de la longueur si celui-ci est rectangulaire, et un premier groupe de récepteurs 2 est placé sur le côté opposé. Ce premier groupe de récepteurs 2 est associé au premier groupe d'émetteurs 1 dans la mesure où il est destiné à capter les rayons infrarouges 10 émis par ses émetteurs. Plus particulièrement, un émetteur 11 est associé à un seul récepteur 22. Ce dernier, placé en vis-à-vis de son émetteur associé, est prévu pour capter le faisceau 10 émis par cet émetteur 11. La direction de ces deux groupes est repérée par un premier axe, axe x, que l'on pourra aussi appeler par la suite axe horizontal.

Un deuxième groupe d'émetteurs 3 est placé perpendiculairement au premier groupe 1. Un deuxième groupe de récepteurs 4 est placé sur le côté opposé, associé au deuxième groupe d'émetteurs et donc destiné à capter les rayons infrarouges 10' émis. La direction de ces deuxièmes groupes est repérée par un deuxième axe, axe y, que l'on pourra encore appeler axe vertical. Comme pour les premiers groupes, un émetteur 33 est associé à un seul récepteur 44.

La commande étant prévue à deux touchers le premier groupe d'émetteurs effectue un premier balayage de rayons infrarouges 10 selon l'axe des x jusqu'à la détection de deux séries de rayons interrompus, permettant de déterminer les positions selon l'axe x, ou horizontal, des points d'impact des touchers. En effet, lors d'un impact, une ombre 15, 16 est créée sur les récepteurs qui interrompt le passage des rayons infrarouges. Les récepteurs selon l'axe x privés de rayons infrarouges détectent les coordonnées de ces points d'impact selon l'axe x. Les coordonnées X d'un point d'impact, correspondant aux positions ou rangs des récepteurs privés de rayons lumineux, peuvent alors être transmises à des moyens de traitement. Le principe de détection selon l'axe y, ou vertical, est le même à partir des deuxièmes groupes d'émetteurs 2, récepteurs 4.

Ces modes de détection manquent de prédictibilité puisque la durée de traitement de la mesure dépend en particulier de la position des points d'impact. A ce problème de manque de prédictibilité, s'ajoute le problème d'incertitude sur les mesures.

Lors du balayage horizontal, selon x, on détecte deux coordonnées du centre des points d'impacts, X1 et X2. Lors du balayage vertical, selon y, on détecte deux coordonnées du centre des points d'impacts, Y1 et Y2. On obtient donc quatre couples possibles de coordonnées, (X1, Y1), (X1, Y2), (X2, Y1) et (X2, Y2) pour deux points d'impacts réels seulement.

La figure 2 illustre cette incertitude. Les deux passages illustrés aux figures 1a et 1b entraînent en fait la détection de quatre zones 7, 8, 70, 80, de même dimensions, associées aux quatre couples de coordonnées centrales (X1, Y1), (X1, Y2), (X2, Y1), (X2, Y2) déduits des interruptions de faisceaux. A côté de la détection des deux points de touchers réels 7 et 8, figure la détection de deux points de touchers fictifs, ou fantômes, 70 et 80.

Les passages verticaux et horizontaux des figures 1a et 1b ne permettent donc pas de dissocier les positions des deux points de touchers réels des deux points de toucher fictifs.

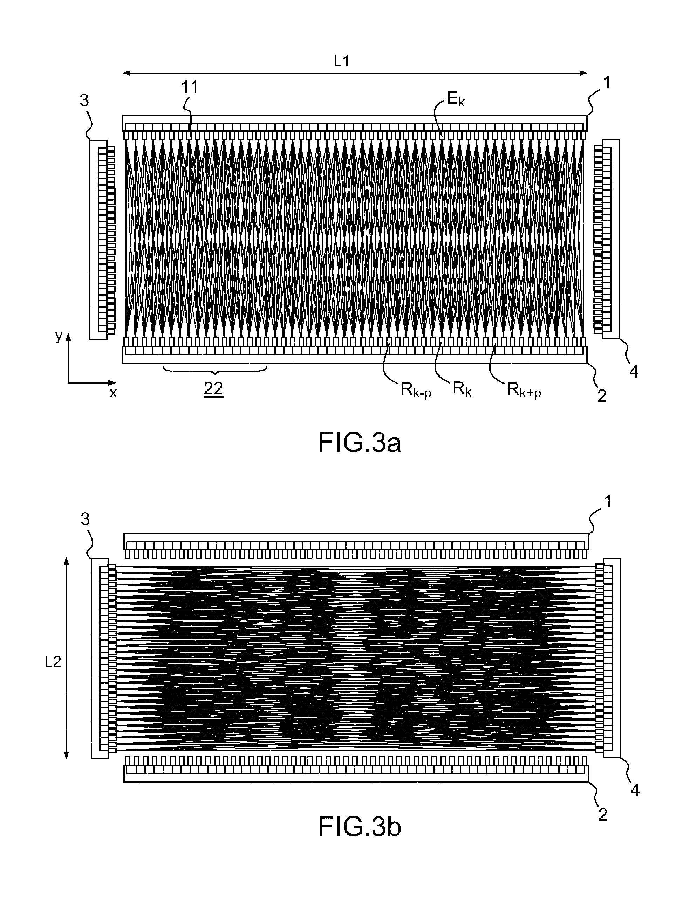

Les figures 3a et 3b illustrent un mode de balayage appliqué par un dispositif selon l'invention. Ce mode de balayage permet à la fois de lever l'ambiguïté de détection des deux touchers 7, 8, illustrée par la figure 2, tout en permettant d'assurer la prédictibilité de la commande. Il peut être appliqué à un dispositif du type des figures 1a et 1b, c'est-à-dire sans changer l'infrastructure matérielle du dispositif d'affichage.

Le balayage des faisceaux lumineux d'un dispositif selon l'invention comporte au moins les deux caractéristiques suivantes :
- chaque émetteur est associé à plusieurs récepteurs dans le balayage horizontal, selon x, et dans le balayage vertical, selon y ;
- tout l'espace est balayé, c'est-à-dire que tous les émetteurs d'un groupe 1, 3 émettent successivement, les cycles de balayages sont initiés selon des périodes de temps fixes, prédéterminées, chaque période englobant la durée du balayage horizontal et du balayage vertical ainsi que la durée de traitement des résultats des balayages, ce traitement calculant et transmettant la position centrale des touches 7, 8 à des interfaces de commande. Un cycle de balayage comporte un balayage complet de durée constante selon le premier groupe 1 d'émetteurs et un balayage complet de durée constante selon le deuxième groupe 3 d'émetteurs.

Dans les exemples de balayages illustrés par les figures 3a et 3b, un émetteur 11 est associé par exemple à 13 récepteurs successifs. Les positions des récepteurs associés peuvent être repérées par les positions -6 à +6, où la position 0 est la position du récepteur placé en vis-à-vis de l'émetteur.

Le nombre de récepteurs associés dépend notamment de la géométrie de l'écran et notamment des dimensions du cadre . Ainsi, en considérant qu'un groupe comporte N émetteurs et son groupe associé N récepteurs, un émetteur Ek, de rang k, est associé à un certains nombre de récepteurs, compris entre Rk-p et Rk+p, où les Rk+i, -p ≤ i ≤ p, représentent l'ensemble des récepteurs associés. On pourrait envisager une solution où le groupe de récepteurs comporte un nombre M de récepteurs différent du nombre N d'émetteurs. On pourrait aussi envisager le cas où les recepteurs associés ne sont pas contigus.

Lors du balayage horizontal, selon l'axe x, les émetteurs 11 du premier groupe d'émetteurs sont activés successivement. Les récepteurs peuvent être activés en permanence, au moins pendant la durée de balayage. Les faisceaux infrarouges sont modulés en fréquence ce qui permet de distinguer le faisceau émis destiné aux récepteurs associés 22 d'une perturbation extérieure au cadre. Pour chaque émetteur, on peut prévoir plusieurs oscillations de l'émission. Deux oscillations suffisent en théorie pour caractériser la modulation. En pratique, une émission produite par un émetteur peut comporter une dizaine d'oscillations.

Le processus est le même pour le balayage vertical, selon l'axe y. On obtient ainsi un balayage fin comme le montrent les figures 3a et 3b où tous les rayons émis et reçus 20 sont mémorisés dans un espace dédié, par exemple dans une table. Un rayon émis et reçu peut en effet être caractérisé de façon univoque par le rang de son émetteur et le rang de son récepteur. Le couple (k, k+j) correspond ainsi au rayon émis par l'émetteur Ek et reçu par le récepteur Rk+j.

Les figures 3a et 3b correspondent au cas où il n'y pas de toucher sur l'écran. Dans ce cas aucun faisceau n'est interrompu. Tous les faisceaux émis sont reçus, et donc tous les couples (k, k+j) possibles sont mémorisés au cours du balayage, -p ≤ j ≤ p.

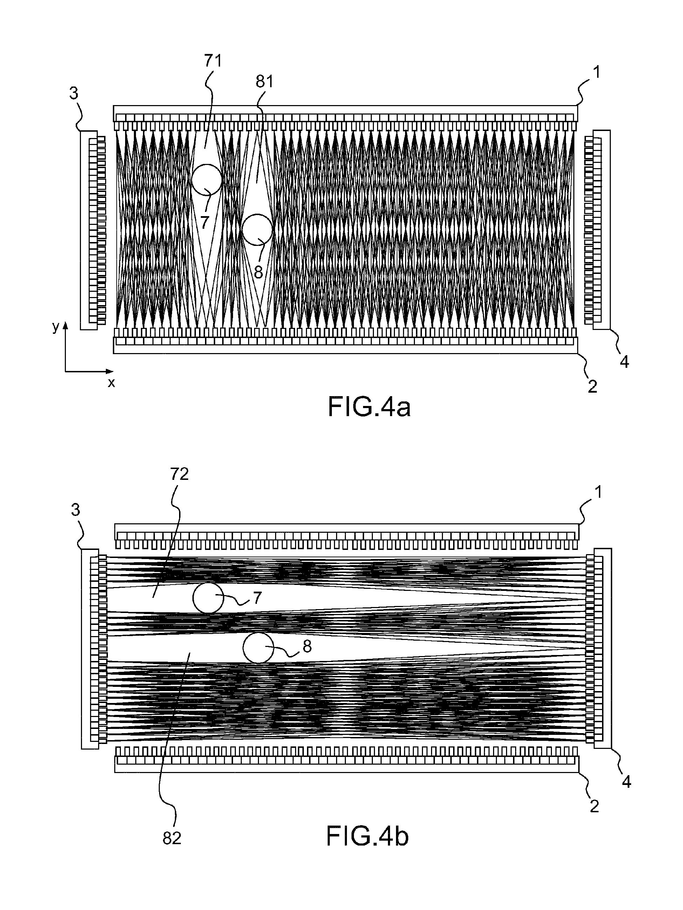

Les figures 4a et 4b illustrent le balayage dans le cas d'une application multitouchers sur le cadre tactile. Il s'agit d'un exemple avec deux touchers 7, 8, les positions étant les mêmes que dans le cas des figures 1a et 1b. Les touchers provoquent des interruptions de rayons créant des zones d'ombres. Les rayons interrompus sont identifiés par leur couple (k, k+j) correspondant à l'émetteur Ek et au récepteur Rk+j,.et intégrés au traitement.

On obtient ainsi un ensemble de couples de rangs (k, k+j) absents de l'espace de mémorisation. Ces couples absents définissent des rayons lumineux absents et donc des espaces 71, 72, 81, 82 non balayés par ces rayons lumineux, deux espaces non balayés 71, 81 pour le balayage selon x et deux espaces non balayés 72, 82 pour le balayage selon y. Un espace non balayé, selon x ou selon y, est un espace où au moins un rayon est arrêté par un toucher 7 ou 8. En d'autres termes, on peut dire qu'un tel espace contient un toucher.

Pour obtenir les couples absents selon la direction, et donc les espaces dans l'ombre 71, 81, on compare par exemple l'ensemble de tous les couples (k, k+j) mémorisés au cours du balayage selon x avec l'ensemble de tous les couples possibles selon cette direction. Cet ensemble de tous les couples (k, k+j) possibles correspond à l'ensemble de toutes les combinaisons Emetteur-Récepteur (Ek, Rk+j) possibles où Rk+j est associé à Ek, c'est-à-dire Rk+j est destiné à capter un des rayons émis par Ek.

Tous ces couples sont prédéterminés, en raison de la connaissance a priori des récepteurs associés à chaque émetteurs et donc de tous les rayons possibles. La totalité des couples possibles correspond au balayage complet de l'écran selon la direction x, sans interruption de rayon. Le processus est le même selon la direction y.

Une fois les balayages selon x et selon y effectués, les moyens de traitement effectuent une analyse bidimensionnelle. A partir de ces données, on peut reconstituer les espaces non balayés 71, 81 selon x et les espaces non balayés 72, 82 selon y, puis on effectue leur intersections.

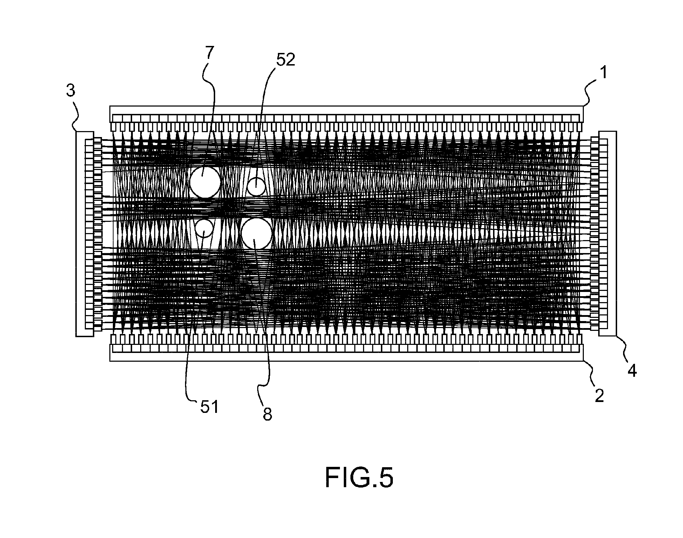

La figure 5 montre comment on peut obtenir les positions des touchers 7 et 8 à partir des espaces 71, 72, 81, 82 définis précédemment. Les intersections de ces quatre espaces définissent quatre zones de dimensions inégales. Comme vu précédement, deux correspondent aux touchers et les deux autres sont des points fantomes. Les deux zones 7, 8 de plus grandes dimensions ne peuvent correspondre qu'aux touchers réels. On notera que les deux autres zones 51, 52 ont les mêmes positions centrales que les touchers fantômes 70, 80 de la figure 2 mais ont cette fois-ci une plus petite dimension permettant de les éliminer

Dans un cas d'utilisation, on pourra par exemple appliquer cette invention sur un écran 12", la vitesse de balayage serait de 40 balayages par secondes. Les cycles de balayages, comporteraient le balayage selon x et le balayage selon y, et seraient par exemple initiés toutes les 25 ms. Avec la vitesse de balayage précédente, il resterait un temps suffisant aux moyens de traitement pour définir la position des touchers selon le processus précédemment décrit et transmettre ces positions, par exemple, à des interfaces d'affichage.

D'autre types d'affichage peuvent être interfacés avec un dispositif selon l'invention, tels que par exemple des images projetées.

L'invention a été décrite pour une commande tactile destinée à l'affichage, mais elle peut s'appliquer à d'autres applications nécessitant une commande tactile.

L'invention a notamment comme avantages qu'elle est prédictible, simple à mettre en oeuvre et qu'elle est économique. En effet, il n'est pas nécessaire de modifier l'infrastructure matérielle existante, seul le traitement est modifié. On peut ainsi effectuer une simple évolution ou modification logicielle quand une modification électronique n'est pas nécessaire.

## Revendications

1. Dispositif de commande tactile du type à barrières infrarouges comportant au moins un cadre, un premier groupe (1) d'émetteurs de rayons infrarouges faisant face à un premier groupe (2) de récepteurs selon une première direction x et un deuxième groupe (3) d'émetteurs de rayons infrarouges faisant face à un deuxième groupe (4) de récepteurs selon une deuxième direction y, lesdits groupes encadrant un espace d'interaction tactile, le balayage de cet espace étant réalisé par les activations successives des émetteurs (11, 33) du premier groupe puis du deuxième groupe, l'intrusion d'un objet opaque, dit toucher, à l'intérieur de l'espace d'interaction tactile provoquant une interruption de rayons émis, **caractérisé en ce que**, pour le premier groupe d'émetteurs et pour le deuxième groupe d'émetteurs :
- chaque émetteur (11, 33, Ek) est associé à un sous-groupe de récepteurs (22, 44, Rk-p à Rk+p) destinés à capter les rayons émis (10, 10') par ledit émetteur, les récepteurs dudit sous-groupe étant disposés en regard dudit émetteur, l'ensemble de tous les couples (k, k+j) balayés étant mémorisé, où k représente le rang d'un émetteur dans le groupe et k+j le rang d'un de ses récepteurs associés ;
- les cycles de balayage sont initiés selon des périodes de temps fixes, un cycle de balayage comportant un balayage complet de durée constante selon le premier groupe (1) d'émetteurs et un balayage complet de durée constante selon le deuxième groupe (3) d'émetteurs, un couple (k, k+j) étant affecté à chaque rayon émis et reçu, k étant le rang de l'émetteur et k+j le rang du récepteur ;
l'ensemble des rayons émis non reçus, identifiés par leurs couples (k, k+j), définissant une ou plusieurs zones d'ombres (71, 72, 81, 82), la détection d'un ou plusieurs touchers (7, 8) étant effectuée par l'analyse de ces zones par lesdits moyens de traitement.

2. Dispositif selon la revendication 1, **caractérisé en ce que** -p < j < p, où p est un entier positif, j prenant certaines ou toutes les valeurs entre -p et p, 2p+1 étant inférieur au nombre de récepteurs du groupe.

3. Dispositif selon l'une quelconque des revendications précédentes, **caractérisé en ce qu'**une première série de zones d'ombres (71, 81) est obtenue selon la direction x, et une deuxième série de zones d'ombres (72, 82) est obtenue selon la direction y, un espace non balayé contenant au moins un toucher, ladite analyse étant effectuée sur le ou les espaces obtenus par l'intersection des premières et deuxièmes séries de zones.

4. Dispositif selon la revendication 3 **caractérisé en ce que** lesdits moyens de traitement distinguent les touchers réels des touchers fantômes sur un critère de tailles, de formes, d'étendue de ces zones d'ombres et/ou par comparaison avec l'état précédent des touchers.

5. Dispositif selon l'une quelconque des revendications précédentes, **caractérisé en ce que** les rayons émis (10, 10') sont modulés en fréquence, le rayon reçu par un récepteur (Rk+j) étant associé à un émetteur (Rk) en fonction du rang dudit récepteur (Rk+j) et de la vérification de ladite modulation.

6. Dispositif selon l'une quelconque des revendications précédentes, **caractérisé en ce que** les moyens de traitement sont incorporés dans ledit dispositif, lesdits moyens de traitement transmettant les positions des touchers à des interfaces d'affichages.

7. Dispositif selon l'une quelconque des revendications précédentes, **caractérisé en ce qu'il** est apte à équiper un cockpit d'aéronef.

8. Procédé de commande tactile du type à barrières infrarouges, ledit procédé utilisant un premier groupe (1) d'émetteurs de rayons infrarouges faisant face à un premier groupe (2) de récepteurs selon une première direction x et un deuxième groupe (3) d'émetteurs de rayons infrarouges faisant face à un deuxième groupe (4) de récepteurs selon une deuxième direction y, lesdits groupes encadrant un espace d'intéraction tactile, le balayage de cet espace étant réalisé par les activations successives des émetteurs (11, 33) du premier groupe puis du deuxième groupe, l'intrusion d'un objet opaque, dit toucher, à l'intérieur de l'espace d'intéraction tactile provoquant une interruption de rayons émis, **caractérisé en ce que**, pour le premier et pour le deuxième groupe d'émetteurs :
- on associe à chaque émetteur (11, 33, Ek) un sous-groupe de récepteurs (22, 44, Rk-p à Rk+p) destinés à capter les rayons émis (10, 10') par ledit émetteur, les récepteurs dudit sous-groupe étant disposés en regard dudit émetteur, l'ensemble de tous les couples (k, k+j) balayés étant mémorisé, où k représente le rang d'un émetteur dans le groupe et k+j le rang d'un de ses récepteurs associés ;
- on initie les cycles de balayage selon des périodes de temps fixes, un cycle de balayage comportant un balayage complet de durée constante selon le premier groupe (1) d'émetteurs et un balayage complet de durée constante selon le deuxième groupe (3) d'émetteurs, un couple (k, k+j) étant affecté à chaque rayon émis et reçu, k étant le rang de l'émetteur et k+j le rang du récepteur ;
l'ensemble des rayons émis non reçus, identifiés par leurs couples (k, k+j), définissant une ou plusieurs zones d'ombres (71, 72, 81, 82), la détection d'un ou plusieurs touchers (7, 8) étant effectuée par une analyse de ces zones.

9. Procédé selon la revendication 8, **caractérisé en ce que** -p < j < p, où p est un entier positif, j prenant certaines ou toutes les valeurs entre -p et p, 2p+1 étant inférieur au nombre de récepteurs du groupe.

10. Procédé selon l'une quelconque des revendications 8 ou 9, **caractérisé en ce qu'**une première série de zones d'ombres (71, 81) est obtenue selon la direction x, et une deuxième série de zones d'ombres (72, 82) est obtenue selon la direction y, un espace non balayé contenant au moins un toucher, ladite analyse étant effectuée sur le ou les espaces obtenus par l'intersection des premières et deuxièmes séries de zones.

11. Procédé selon la revendication 10, **caractérisé en ce qu'**on distingue les touchers réels des touchers fantômes sur un critère de tailles, de formes, d'étendue de ces zones d'ombres et/ou par comparaison avec l'état précédent des touchers.

12. Procédé selon l'une quelconque des revendications 8 à 11, **caractérisé en ce que** les rayons émis (10, 10') sont modulés en fréquence, le rayon reçu par un récepteur (Rk+j) étant associé à un émetteur (Rk) en fonction du rang dudit récepteur (Rk+j) et de la vérification de ladite modulation.
